# EUROPÄISCHE PATENTSCHRIFT

(11) **EP 3 116 773 B1**
(45) Veröffentlichungstag und Bekanntmachung des Hinweises auf die Patenterteilung: **07.06.2023**
(21) Anmeldenummer: 15709115.8
(22) Anmeldetag: 20.02.2015
(51) Int. Cl.: B62K 21/12, B62J 1/02, B62K 21/14

(54) **VERBUNDBAUTEIL MIT KLEMMSITZ, INSBESONDERE LENKERBÜGEL ODER SATTELSTÜTZE**
COMPOSITE COMPONENT WITH CLAMPING SEAT, IN PARTICULAR HANDLEBAR OR SEAT POST
ÉLÉMENT DE LIAISON À LOGEMENT DE SERRAGE, NOTAMMENT ÉTRIER DE GUIDON OU TIGE DE SELLE

(30) Priorität: 11.03.2014 DE 202014101078 U; 18.09.2014 DE 102014113454
(43) Veröffentlichungstag der Anmeldung: 18.01.2017
(73) Patentinhaber: all ahead composites GmbH, 97209 Veitshöchheim (DE)
(72) Erfinder: GEMPERLEIN, Christian, 97440 Werneck (DE)
(74) Vertreter: advotec.
(86) Internationale Anmeldenummer: PCT/EP2015/053594
(87) Internationale Veröffentlichungsnummer: WO 2015/135736

(56) Entgegenhaltungen:
- EP-A1- 1 564 125
- WO-A1-2004/020510

## Beschreibung

Die Erfindung betrifft ein Verbundbauteil nach dem Oberbegriff des Anspruchs 1, wie gezeigt in EP1564125A1.

Die Druckschrift EP 1 564 125 A1 offenbart ein Fahrrad mit einem Lenker, welches inklusive des Lenkers aus einem Faserverbundstoff hergestellt sein kann. An dem Abschnitt, an dem eine zur Befestigung des Lenkers am Fahrrad vorgesehene Klemme an den Lenker angreift, weist der Lenker eine Dämpfung aus einem nachgiebigen Material auf, welche durch eine weiteres Bauteil aus Faserverbundstoff umschlossen ist, an welchem die Klemme letztendlich angreift.

Im Hinblick auf die Befestigung von Bauteilen an den gattungsgemäßen Verbundbauteilen, beispielsweise bei der Befestigung des Lenkervorbaus an einem Lenkbügel oder bei der Befestigung eines Sattels oder eines Rohrrahmens an einer Sattelstütze, weisen die bekannten Verbundbauteile den Nachteil auf, dass diese hinsichtlich der radial wirkenden Klemmkräfte sehr empfindlich sind und deshalb leicht beschädigt werden. Aufgrund der Faserstruktur, die üblicherweise von einer gehärteten Harzmatrix umschlossen wird, sind nämlich die rohrförmigen Trägerelemente in Bezug auf Zug- und Biegebelastungen hoch widerstandsfähig. Radial auf das rohrförmige Trägerelement wirkende Klemmkräfte bewirken dagegen sehr leicht ein Delaminieren der Fasern, was zum Bruch des Verbundbauteils führen kann. Aus diesem Grund müssen die aus Faserverbundmaterial hergestellten, rohrförmigen Trägerelemente vielfach eine höhere Bauteildicke aufweisen, als es für die im Betrieb auftretenden Zug- und Biegekräfte erforderlich wäre, da ansonsten eine Befestigung der Klemmelemente den dadurch verursachten Radialkräften nicht mit der erforderlichen Festigkeit möglich wäre. Dies bedeutet also mit anderen Worten, dass die Bauteildicke der bekannten Verbundbauteile signifikant durch die bei der Anbringung der Klemmelemente aufzubringenden Klemmkräfte bestimmt wird. Dies insbesondere auch deshalb, da die Klemmelemente zu einer signifikant erhöhten Kerbwirkung führen, die Risse und Brüche im Faserverbundmaterial verursachen kann. Die höhere Bauteildicke ist aber grundsätzlich unerwünscht, da damit ein höheres Gewicht und höhere Herstellungskosten verbunden sind. Aufgabe der vorliegenden Erfindung ist es deshalb, ein neues Verbundbauteil, insbesondere einen neuen Lenkerbügel oder eine neue Sattelstütze, vorzuschlagen, an dem in bekannter Weise ein Klemmsitz zur Anbringung eines Klemmelements vorgesehen ist und das eine geringere Bauteildicke des Faserverbundmaterials ermöglicht.

Diese Aufgabe wird durch ein Verbundbauteil, einen Lenkerbügel und eine Sattelstütze nach der Lehre der Ansprüche 1, 6 und 9 gelöst.

Vorteilhafte Ausführungsformen der Erfindung sind Gegenstand der Unteransprüche.

Das erfindungsgemäße Verbundbauteil beruht auf der Grundüberlegung, dass im Bereich des Klemmsitzes von der Außenseite des aus Faserverbundmaterial hergestellten Trägerelements ein Druckverteilelement aus einem elastisch verformbaren Material vorgesehen ist. Die Elastizität des elastisch verformbaren Materials ist dabei höher als die Elastizität des Faserverbundmaterials. Wird nun ein Klemmelement im Bereich des Klemmsitzes angebracht, so wirken die dabei aufgebrachten Klemmkräfte zunächst auf das Druckverteilelement. Aufgrund der elastischen Eigenschaften des Druckverteilelements werden Druckspitzen dabei abgebaut und die Klemmkräfte gleichmäßiger in das darunter liegende Faserverbundmaterial eingeleitet. Insbesondere an den Kanten des Klemmsitzes ist dies von großem Vorteil, da die durch die Kante des Klemmelements verursachte Kerbwirkung durch das elastische Druckverteilelement signifikant herabgesetzt wird. Aufgrund der geringeren Belastung des Faserverbundmaterials im Bereich des Klemmsitzes kann das Trägerelement selbst mit einer geringeren Bauteildicke gefertigt werden, was zu einer Reaktion des Gewichts und der Herstellungskosten führt.

Darüber hinaus hat das erfindungsgemäße Verbundbauteil den Vorteil, dass der Reib-Koeffizient des Druckverteilelements aufgrund seiner elastischen Eigenschaften erheblich höher liegt als der Reib-Koeffizient des aus Faserverbundmaterial hergestellten Trägerelements. Wird nun das Klemmelement im Bereich des Druckverteilelements angebracht, so reicht bereits eine relativ geringe Klemmkraft aus, um den Klemmsitz reibschlüssig am Klemmelement festzulegen. Im Ergebnis können also auch die vom Klemmelement anzubringenden Klemmkräfte reduziert werden, ohne dass dadurch die Fixierung des Verbundbauteils im Klemmelement verschlechtert würde. Die Reduktion der Klemmkräfte aufgrund des höheren Reib-Koeffizienten des Druckverteilers führt wiederum zu einer geringeren Belastung des Faserverbundmaterials, so dass auch diesbezüglich eine Verringerung der Bauteildicke des Faserverbundmaterials ermöglicht wird.

Die geometrische Form des Druckverteilelements ist grundsätzlich beliebig. Gattungsgemäß ist das Druckverteilelement in der Art einer Druckverteilschicht ausgebildet, die die Außenseite des aus Faserverbundmaterial hergestellten Trägerelements teilweise umfasst. Besonders vorteilhaft ist es also, wenn die Druckverteilschicht das Trägerelement zylindrisch oder zylinder-abschnittsförmig umgreift. Die Größe und Anordnung der Druckverteilschicht ist dabei so vorzusehen, dass möglichst die gesamte vom Klemmelement aufgebrachte Klemmkraft über die Druckverteilschicht in das darunter liegende Faserverbundmaterial eingeleitet wird.

Gattungsgemäß ist die Druckverteilschicht selektiv in bestimmten Bereichen des Trägerelements, nämlich im Bereich der Klemmsitze angebracht. Auf diese Weise werden also nur die Bereiche an der Außenseite des Trägerelements mit einer Druckverteilschicht ausgestattet, die später als Klemmsitze dienen sollen.

Überdeckt die Druckverteilschicht das Faserverbundmaterial des Trägerelements nur selektiv, so wird sich daraus ein Übergang zwischen dem elastisch verformbaren Material der Druckverteilschicht zum Faserverbundmaterial des Trägerelements entlang der Seitenkanten der Druckverteilschicht bilden. Im Hinblick auf die Haltbarkeit des Verbundbauteils ist dabei besonders wünschenswert, wenn die Außenkanten der Druckverteilschicht nicht offen liegen, sondern durch das Faserverbundmaterial seitlich geschützt werden. Deshalb geht erfindungsgemäß die Außenoberfläche der Druckverteilschicht entlang der Außenkanten glattflächig in die Außenoberfläche des aus Faserverbundmaterial hergestellten Trägerelements über. Im Ergebnis wird dadurch eine glattflächige Oberfläche des Trägerelements gebildet, in dem sich die harten Bereiche des Faserverbundmaterials mit den elastisch verformbaren, Bereichen der Druckverteilschicht abwechseln.

Besonders einfach und kostengünstig wird eine fugenfreie und stoffschlüssige Befestigung der Druckverteilschicht am Faserverbundmaterial des Trägerelements dadurch erreicht, dass das elastisch verformbare Material der Druckverteilschicht bereits beim Härten des Faserverbundmaterials in das Trägerelement eingebacken wird. Dies bedeutet mit anderen Worten, dass die angefertigten Druckverteilschichtelemente in die Form zur Herstellung des Trägerelements eingebracht und zusammen mit dem noch ungehärteten Faserverbundmaterial in der Form ausgehärtet werden. Auf eine Materialverträglichkeit zwischen dem Material der Druckverteilschicht und dem Harzmaterial des Faserverbundmaterials ist dabei zu achten.

Um die Klemmkräfte zuverlässig von der Druckverteilschicht in das darunter liegende Faserverbundmaterial des Trägerelements übertragen zu können, ist es besonders vorteilhaft, wenn das elastisch verformbare Material der Druckverteilschicht stoffschlüssig mit dem Faserverbundmaterial des Trägerelements verbunden ist.

Aus welchem Material das Trägerelement hergestellt ist, ist grundsätzlich beliebig. Die größten Vorteile bietet die Erfindung im Hinblick auf Verbundbauteile, die aus Kohlefaserverbundmaterial (Carbon) hergestellt sind, da dieses Material eine hohe Kerbempfindlichkeit aufweist und zudem hohe Materialkosten verursacht.

Zur Herstellung des Druckverteilelements haben sich insbesondere Elastomermaterialien als geeignet erwiesen.

Welches Elastomermaterial zur Herstellung des Druckverteilelements eingesetzt wird, ist grundsätzlich beliebig. Bevorzugt sollte das Material allerdings Kautschuk enthalten, wobei auch unterschiedliche Arten von Kautschuk, nämlich EPDM, EAM, FKM, ACM, MBR, HMBR, XHMBR, NR, CSM, VMQ, MVQ, SVMQ und/oder MFQ enthalten kann.

Zu welchem Einsatzzweck das erfindungsgemäße Verbundbauteil, mit allen seinen Merkmalen, welche an anderer Stelle mit ihren Vorteilen und in Anspruch 1 beschrieben sind, eingesetzt wird, ist grundsätzlich beliebig. Gemäß einer erfindungsgemäßen Variante ist es vorgesehen, dass das Verbundbauteil in der Art eines Lenkerbügels ausgebildet ist und zur Verwendung an einem Fahrrad dient. Der Klemmsitz des Lenkerbügels ist dann dazu vorgesehen, dass daran das Klemmelement eines Lenkervorbaus reibschlüssig befestigt wird. Durch die Anbringung des erfindungsgemäßen Druckverteilelements an dem aus Faserverbundmaterial hergestellten Lenkerbügel wird erreicht, dass die durch das Klemmelement des Lenkervorbaus verursachte Kerbwirkung und die zur Fixierung des Lenkerbügels am Lenkervorbau erforderliche Klemmkraft signifikant herabgesetzt wird, so dass die Bauteildicke des Faserverbundmaterials abgesenkt werden kann. Von dieser geringeren Bauteildicke des Faserverbundmaterials werden Herstellkosten eingespart und eine sehr wünschenswerte Reduktion des Bauteilgewichtes erreicht.

Zusätzlich zur Anbringung des erfindungsgemäßen Druckverteilelements im Bereich des Klemmsitzes zur Anbringung des Lenkervorbaus kann der Lenkerbügel auch noch weitere Klemmsitze aufweisen, die jeweils mit einem Druckverteilelement ausgestattet sind. An diesen weiteren Klemmsitzen könnten dann weitere Anbauteile, beispielsweise Griffe, Bremsen, Schalthebel oder Lampen in bekannter Art und Weise durch Aufbringung von Klemmkräften reibschlüssig befestigt werden. Wiederum wird durch die Druckverteilelemente im Bereich dieser zusätzlichen Klemmsitze erreicht, dass die unerwünschte Kerbwirkung auf das Faserverbundmaterial des Trägerelements reduziert wird.

Alle im Hinblick auf das Faserverbundbauteil beschriebenen bevorzugten Varianten lassen sich in gleicher Weise auch auf den erfindungsgemäßen Lenkerbügel übertragen.

Ein weiteres erfindungsgemäßes Einsatzfeld des erfindungsgemäßen Verbundbauteils, mit allen seinen Merkmalen, welche an anderer Stelle mit ihren Vorteilen und in Anspruch 1 beschrieben sind, ist die Herstellung von aus Faserverbundmaterial hergestellten Sattelstützen. Diese Sattelstützen weisen üblicherweise einen Klemmsitz zur Anbringung eines Sattels und/oder einen Klemmsitz zur Anbringung der Sattelstütze in einem Rahmenrohr auf. Die erfindungsgemäße Sattelstütze ist wiederum dadurch charakterisiert, dass zumindest ein Klemmsitz mit einem Druckverteilelement ausgestattet ist, um die unerwünschte Kerbwirkung und die unerwünschten Kraftspitzen der radial wirkenden Klemmkräfte zu reduzieren. Außerdem kann durch das elastisch verformbare Druckverteilelement wiederum der Reizkraft-Koeffizient in der Befestigungsfuge erhöht werden. Die bevorzugten Varianten des erfindungsgemäßen Verbundbauteils lassen sich in gleicher Weise auch auf die erfindungsgemäße Sattelstütze übertragen.

Eine Ausführungsform der Erfindungen ist in den Zeichnungen schematisch dargestellt und wird nachfolgend beispielhaft erläutert.
- Fig. 1: zeigt ein in der Art eines Lenkerbügels ausgebildetes Verbundbauteil bei Anbringung eines Lenkervorbaus in perspektivischer Ansicht;
- Fig. 2: zeigt das Verbundbauteil gemäß Fig. 1 im Bereich des Klemmsitzes zur Anbringung des Lenkervorbaus im Querschnitt.

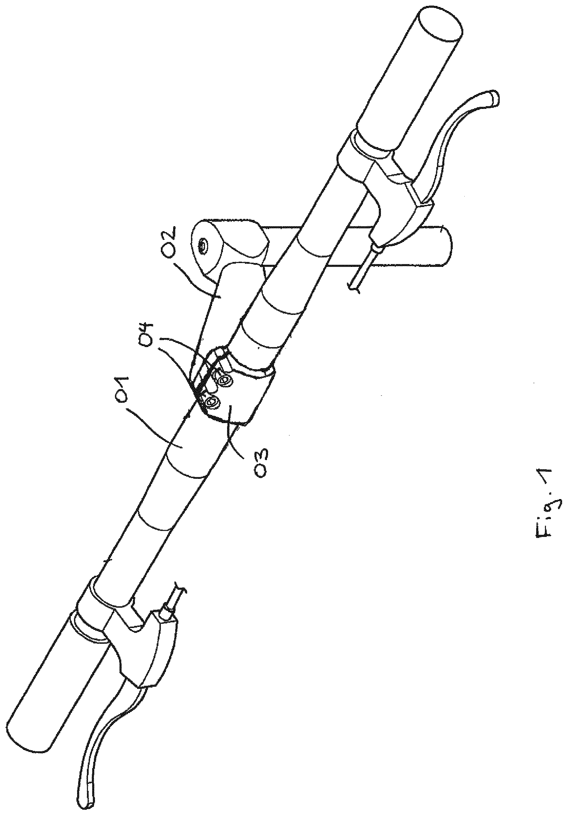

**Figur 1** zeigt ein erfindungsgemäßes Verbundbauteil 01, das in der Art eines Lenkerbügels ausgebildet ist. In der Mitte des Verbundbauteils 01 ist ein Klemmsitz vorgesehen, an dem der Lenkervorbau 02 mit einem Klemmelement 03 reibschlüssig befestigt werden kann. Die Befestigung erfolgt dabei durch Anziehen von Klemmschrauben 04, so dass auf der Innenseite des Klemmelements 03 eine radial gerichtete Klemmkraft auf den Klemmsitz des Verbundbauteils 01 erfolgt.

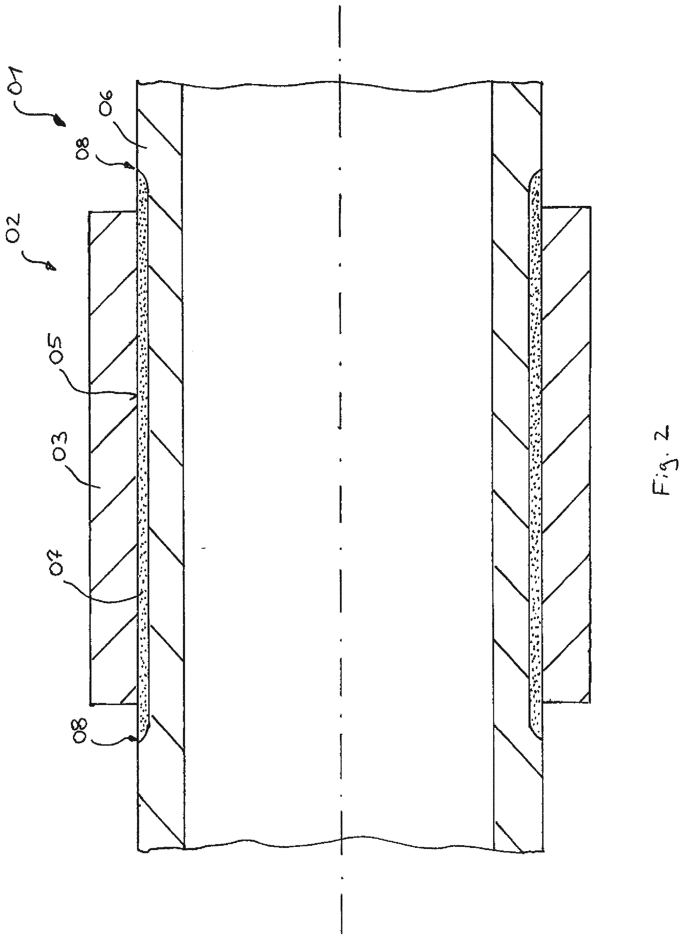

**Figur 2** zeigt das Verbundbauteil 01 mit dem im Bereich des Klemmsitzes 05 angebrachten Klemmelement 03 im Querschnitt. Das als Lenkerbügel verwendete Verbundbauteil 01 umfasst ein aus Faserverbundmaterial, nämlich Carbon, hergestelltes, rohrförmiges Trägerelement 06. Durch die Verwendung von Carbon zur Herstellung des Trägerelements 06 wird eine sehr hohe Festigkeit bzw. Steifigkeit bei gleichzeitig sehr geringem Bauteilgewicht erreicht. Im Bereich des Klemmsitzes 05 zur Anbringung des Klemmelements 03 ist an der Außenseite des Trägerelements 06 ein aus kautschukhaltigem Elastomermaterial hergestelltes

Druckverteilelement 07 vorgesehen. Das Druckverteilelement 07 bildet eine Druckverteilschicht und umgreift das Trägerelement 06 im Bereich des Klemmsitzes 05 zylindrisch. Die Breite des Druckverteilelements 07 ist dabei etwas größer als die Breite des Klemmsitzes 03, um die unerwünschte Kerbwirkung im Bereich der seitlichen Kanten des Klemmelements 03 abzufangen. Das Druckverteilelement 07 ist also nur selektiv im Bereich des Klemmsitzes 05 angebracht. Gegebenfalls können im Bereich der anderen Anbauteile, nämlich der Bremse oder der Griffe, weitere Druckverteilelemente vorgesehen werden sowie auch die anderen Bauteile reibschlüssig durch Aufbringung von Klemmkräften befestigt werden sollen.

An den Außenkanten 08 des Druckverteilelements 07 geht die Außenoberfläche des elastischen Materials, aus dem das Druckverteilelement 07 hergestellt ist, nut- und fugenfrei in das Faserverbundmaterial des Trägerelements 06 über, so dass eine glattflächigem zylindrische Oberfläche gebildet wird. Dies wird dadurch erreicht, dass das Elastomermaterial des Druckverteilelements bei der Herstellung des Trägerelements in die dazu vorgesehen Form eingelegt und mit dem noch ungehärteten Faserverbundmaterial überdeckt wird. Beim Aushärten des Faserverbundmaterials wird dann das Elastomermaterial des Druckverteilelements in das Faserverbundmaterial des Trägerelements eingebacken. Das Elastomermaterial des Druckverteilelements und das Faserverbundmaterial des Trägerelements verbinden sich dabei außerdem stoffschlüssig, so dass problemlos sehr hohe Kräfte von dem Druckverteilelement in das darunter liegende Trägerelement übertragen werden können.

Hinsichtlich der im Bereich des Klemmsitzes auftretenden, radial gerichteten Klemmkräfte weist das Druckverteilelement eine außerordentlich hohe Stabilität auf. Aufgrund seiner elastischen Eigenschaften bewirkt es außerdem, dass Druckspitzen an der Oberfläche des darunter liegenden Trägerelements abgebaut und die Kerbwirkung im Bereich der Ränder des Klemmelements reduziert werden, so dass eine Schädigung des Faserverbundmaterials durch die Klemmkräfte auch bei relativ geringer Bauteildicke des Faserverbundmaterials ausgeschlossen ist.

## Patentansprüche

1. Verbundbauteil (01) mit einem aus Faserverbundmaterial hergestellten, rohrförmigen Trägerelement (06), wobei an der Außenseite des Verbundbauteils (01) zumindest ein Klemmsitz (05) vorgesehen ist, wobei im Bereich des Klemmsitzes (05) an der Außenseite des aus Faserverbundmaterial hergestellten Trägerelements (06) ein Druckverteilelement (07) aus einem elastisch verformbaren Material vorgesehen ist, wobei die Elastizität des elastisch verformbaren Materials höher als die Elastizität des Faserverbundmaterials ist, wobei an dem Klemmsitz (05) ein Klemmelement (03) durch Aufbringung einer Klemmkraft reibschlüssig an dem Druckverteilelement (07) festlegbar ist, wobei das Druckverteilelement (07) in der Art einer, das Trägerelement (06) insbesondere zylindrisch oder zylinderabschnittsförmig umgreifenden, Druckverteilschicht ausgebildet ist, wobei die Druckverteilschicht (07) das Faserverbundmaterial des Trägerelements (06) selektiv nur im Bereich des Klemmsitzes (05) überdeckt,
**dadurch gekennzeichnet,**
**dass** die Außenoberfläche der Druckverteilschicht (07) an den Außenkanten (08) glattflächig in die Außenoberfläche des aus Faserverbundmaterial hergestellten Trägerelements (06) übergeht und dass das elastisch verformbare Material des Druckverteilelements (07) beim Härten des Faserverbundmaterials in das Trägerelement (06) eingebacken ist.

2. Verbundbauteil nach Anspruch 1,
**dadurch gekennzeichnet,**
**dass** das elastisch verformbare Material des Druckverteilelements (07) stoffschlüssig mit dem Faserverbundmaterial des Trägerelements (06) verbunden ist.

3. Verbundbauteil nach Anspruch 1 oder 2,
**dadurch gekennzeichnet,**
**dass** das Trägerelement (06) aus Kohlefaserverbundmaterial hergestellt ist.

4. Verbundbauteil nach einem der Ansprüche 1 bis 3,
**dadurch gekennzeichnet,**
**dass** das Druckverteilelement (07) aus Elastomermaterial hergestellt ist.

5. Verbundbauteil nach Anspruch 4,
**dadurch gekennzeichnet,**
**dass** das Elastomermaterial des Druckverteilelements (07) Kautschuk enthält.

6. Verbundbauteil nach einem der Ansprüche 1 bis 5,
**dadurch gekennzeichnet,**
**dass** das Verbundbauteil in der Art eines Lenkerbügels ausgebildet ist.

7. Verbundbauteil nach Anspruch 6,
**dadurch gekennzeichnet,**
**dass** an der Außenseite des Lenkerbügels (01) weitere Klemmsitze zur Anbringung weiterer Anbauteile, insbesondere Griffe, Bremsen, Schalthebel und/oder Lampen, vorgesehen sind, an denen die Anbauteile mit Klemmelementen durch Aufbringung einer Klemmkraft reibschlüssig festlegbar sind, wobei im Bereich der weiteren Klemmsitze an der Außenseite des aus Faserverbundmaterial hergestellten Trägerelements ein oder mehrere Druckverteilelemente aus einem elastisch verformbaren Material vorgesehen sind, und wobei die Elastizität des elastisch verformbaren Materials höher als die Elastizität des Faserverbundmaterials ist.

8. Verbundbauteil nach Anspruch 6 oder 7 zur Verwendung an einem Fahrrad.

9. Verbundbauteil nach einem der Ansprüche 1 bis 5,
**dadurch gekennzeichnet,**
**dass** das Verbundbauteil in der Art einer Sattelstütze ausgebildet ist.

10. Verbundbauteil nach Anspruch 9 zur Verwendung an einem Fahrrad.

## Claims

1. A composite component (01) having a tubular support element (06) made of fibre composite material, at least one clamping seat (05) being provided on the outer side of the composite component (01), a pressure distribution element (07) made of an elastically deformable material being provided on the outer side of the support element (06), which is made of fibre composite material, in the area of the clamping seat (05), the elasticity of the elastically deformable material being greater than the elasticity of the fibre composite material, a clamping element (03) being fixable to the pressure distribution element (07) in a friction-locking manner at the clamping seat (05) by applying a clamping force, the pressure distribution element (07) being a pressure distribution layer surrounding the support element (06) in particular cylindrically or in the shape of a cylinder segment, the pressure distribution layer (07) selectively covering the fibre composite material of the support element (06) in the area of the clamping seat (05) only,
**characterised in that**
the outer surface of the pressure distribution layer (07) is flush with the outer surface of the support element (06), which is made of fibre composite material, at the outer edges (08) and that the elastically deformable material of the pressure distribution element (07) is baked into the support element (06) during curing of the fibre composite material.

2. The composite component according to claim 1,
**characterised in that**
the elastically deformable material of the pressure distribution element (07) is bonded to the fibre composite material of the support element (06).

3. The composite component according to claim 1 or 2,
**characterised in that**
the support element (06) is made of carbon-fibre composite material.

4. The composite component according to any one of claims 1 to 3,
**characterised in that**
the pressure distribution element (07) is made of elastomer material.

5. The composite component according to claim 4,
**characterised in that**
the elastomer material of the pressure distribution element (07) contains rubber.

6. The composite component according to any one of claims 1 to 5,
**characterised in that**
the composite component is a handlebar.

7. The composite component according to claim 6,
**characterised in that**
further clamping seats for attaching further attachments, in particular handles, brakes, shift levers and/or lamps, are provided on the outer side of the handlebar (01), the attachments being fixable to said further clamping seats in a friction-locking manner by applying a clamping force using clamping elements, one or more pressure distribution elements made of an elastically deformable material being provided on the outer side of the support element, which is made of fibre composite material, in the area of the further clamping seats, the elasticity of the elastically deformable material being greater than the elasticity of the fibre composite material.

8. The composite component according to claim 6 or 7 for use on a bicycle.

9. The composite component according to any one of claims 1 to 5,
**characterised in that**
the composite component is a seat post.

10. The composite component according to claim 9 for use on a bicycle.

## Revendications

1. Élément composite (01) ayant un élément de support (06) tubulaire en matériau composite à fibres, au moins un siège de serrage (05) étant disposé sur le côté extérieur de l'élément composite (01), un élément de répartition de pression (07) en matériau élastiquement déformable étant disposé sur le côté extérieur de l'élément de support (06) en matériau composite à fibres dans la région du siège de serrage (05), l'élasticité du matériau élastiquement déformable étant supérieure à l'élasticité du matériau composite à fibres, un élément de serrage (03) pouvant être fixé à l'élément de répartition de pression (07) par liaison par friction au niveau du siège de serrage (05) en appliquant une force de serrage, l'élément de répartition de pression (07) étant une couche de répartition de pression entourant l'élément de support (06) notamment de façon cylindrique ou en forme d'un segment de cylindre, la couche de répartition de pression (07) ne couvrant sélectivement le matériau composite à fibres de l'élément de support (06) que dans la région du siège de serrage (05),
**caractérisé en ce que**
la surface extérieure de la couche de répartition de pression (07) forme une surface plane avec la surface extérieure de l'élément de support (06) en matériau composite à fibres aux bords extérieurs (08) et **en ce que** le matériau élastiquement déformable de l'élément de répartition de pression (07) est cuit dans l'élément de support (06) lors du durcissement du matériau composite à fibres.

2. Élément composite selon la revendication 1,
**caractérisé en ce que**
le matériau élastiquement déformable de l'élément de répartition de pression (07) est lié au matériau composite à fibres de l'élément de support (06) par liaison de matière.

3. Élément composite selon la revendication 1 ou 2,
**caractérisé en ce que**
l'élément de support (06) est en matériau composite à fibres de carbone.

4. Élément composite selon l'une quelconque des revendications 1 à 3,
**caractérisé en ce que**
l'élément de répartition de pression (07) est en matériau élastomère.

5. Élément composite selon la revendication 4,
**caractérisé en ce que**
le matériau élastomère de l'élément de répartition de pression (07) contient du caoutchouc.

6. Élément composite selon l'une quelconque des revendications 1 à 5,
**caractérisé en ce que**
l'élément composite est un guidon.

7. Élément composite selon la revendication 6,
**caractérisé en ce que**
d'autres sièges de serrage pour attacher d'autres accessoires, notamment des poignées, des freins, des leviers de vitesse et/ou des phares, sont disposés sur le côté extérieur du guidon (01), les accessoires pouvant être fixés auxdits autres sièges de serrage par liaison par friction en appliquant une force de serrage au moyen d'éléments de serrage, un ou plusieurs éléments de répartition de pression en matériau élastiquement déformable étant disposés sur le côté extérieur de l'élément de support en matériau composite à fibres dans la région des autres sièges de serrage, l'élasticité du matériau élastiquement déformable étant supérieure à l'élasticité du matériau composite à fibres.

8. Élément composite selon la revendication 6 ou 7 pour l'utilisation sur un vélo.

9. Élément composite selon l'une quelconque des revendications 1 à 5,
**caractérisé en ce que**
l'élément composite est une tige de selle.

10. Élément composite selon la revendication 9 pour l'utilisation sur un vélo.
